Europäisches Patentamt

European Patent Office

Office européen des brevets

(11) Numéro de publication: **0 1 1 1 590**
**B1**

(12) **FASCICULE DE BREVET EUROPEEN**

(45) Date de publication du fascicule du brevet:
21.05.86

(51) Int. Cl.⁴: **A 23 B 7/04**

(21) Numéro de dépôt: **82111953.4**

(22) Date de dépôt: **23.12.82**

(54) **Procédé de préparation des légumes ou des fruits congelés produisant un volume réduit d'eaux résiduaires.**

(43) Date de publication de la demande:
**27.06.84 Bulletin 84/26**

(45) Mention de la délivrance du brevet:
**21.05.86 Bulletin 86/21**

(84) Etats contractants désignés:
**BE CH FR GB LI SE**

(56) Documents cités:
**BE - A - 479 239**
**US - A - 1 508 862**
**US - A - 2 140 043**
**US - A - 2 385 140**
**US - A - 2 449 406**
**US - A - 2 504 869**
**US - A - 3 368 366**
**US - A - 3 607 313**

(73) Titulaire: **FRISCO-FINDUS AG, CH-9400 Rorschach (CH)**

(72) Inventeur: **Bengtsson, Bengt, Astergatan 17,**
**S-267 00 Bjuv (SE)**
Inventeur: **Lindberg, Peter, Place de l'Eglise 1462,**
**CH-1426 Concise (CH)**

LIBER, STOCKHOLM 1986

# 0 111 590

## Description

L'invention a trait à un procédé de préparation des légumes ou des fruits congelés produisant un volume réduit d'eaux résiduaires.

Dans le traitement habituel des légumes et des fruits congelés, on lave les légumes ou fruits récoltés à l'eau, on les calibre, on les pare éventuellement, on les blanchit à l'eau, on les refroidit à l'eau, on ajuste leur teneur en sel ou en sucre et on les congèle. Le blanchiment est essentiel car il inactive les enzymes, expulse l'air et réduit la quantité des microorganismes présents dans la matière première. Il doit être suivi d'un refroidissement rapide dont le rôle est de stopper l'apport de chaleur dans les tissus et d'éviter la décoloration. Le refroidissement à l'eau permet également de diminuer la charge des congélateursde manière qu'ils puissent être utilisés efficacement. Dans le procédé classique, les étapes de blanchiment et de refroidissement produisent cependant environ 40 % en poids du total des eaux résiduaires.

Selon un procédé décrit dans le brevet britannique No. 1.405.649, on évite le blanchiment lors de la fabrication de légumes en boîtes de manière à préserver leur couleur sans utiliser de traitement chimique en stérilisant rapidement les légumes à haute température dans un échangeur à surface raclée et en les mettant de manière aseptique dans des boîtes de conserve préalablement stérilisées.

Un autre procédé relatif à l'appertisation décrit dans le brevet des Etats-Unis No. 2.471.170, préconise le blanchiment à l'eau chaude antérieurement à la mise en boîtes. Selon ce brevet, on transforme les eaux de blanchiment en liquide de couverture (eau salée, sucrée, etc.) qu'on ajoute aux légumes lors de la mise en boîtes de manière à récupérer les composés hydrosolubles qui ont diffusés dans l'eau de blanchiment. Les deux procédés ci-dessus permettent de réduire les pertes en nutriments, en saveur et en arôme mais concernent uniquement les conserves.

Bien qu'il soit connu des brevets US-A-2 504 869 - 2 385 140 et 3 607 313, de traiter après congélation les fruits et légumes par un liquide (jus, sirop de sucre) afin d'obtenir un glaçage en surface et bien que dans le procédé selon BE-A-479 239, on récolte l'eau de condensation du traitement à chaud, le condensat n'est pas utilisé comme liquide de glaçage.

Dans le cas des fruits et des légumes destinés à être congelés, le blanchiment et le refroidissement sont indispensables et l'on a peu tenu compte jusqu'à présent de la perte des composés hydrosolubles de valeur par diffusion dans l'eau ainsi que de la pollution des eaux produites lors de ces étapes.

La demanderesse a trouvé qu'on pouvait réduire considérablement le volume des eaux résiduaires et donc la pollution tout en récupérant les solubles de valeur et en augmentant le rendement pondéral.

Le procédé selon l'invention consiste à traiter les légumes ou fruits de la manière habituelle jusqu'à l'étape de blanchiment et est caractérisé par le fait qu'on les blanchit au moyen de vapeur d'eau ou d'un mélange de vapeur d'eau et d'air, qu'on récupère un condensat, qu'on refroidit les légumes ou fruits au moins en partie au moyen d'air, qu'on les congèle et qu'on procède au glaçage de leur surface avec au moins une partie du condensat produit lors du blanchiment.

Tout légume ou fruit qu'on blanchit d'ordinaire pour en assurer la conservation à l'état congelé peut être traité par le présent procédé. Celui-ci est cependant spécialement adapté au traitement des légumes et des fruits parés ou entiers pour lesquels les pertes en composés hydrosolubles sont élevées lors du blanchiment à l'eau à cause de leur grande surface comme par exemple les légumes feuillus, épinards, choux, choux de Bruxelles, poireaux, asperges; les épices, par exemple origan, persil, romarin; les légumes en racines coupés en tranches fines, par exemple carottes, céleris, navets, pommes de terre, rutabagas; ou encore à cause de leur teneur élevée en composés très solubles dans l'eau comme les sucres et les composés savoureux, par exemple pommes, oignons, maïs, poires, pêches, petits-pois. On peut encore citer par exemple les aubergines, différents haricots, broccoli, choux-fleurs et divers champignons.

Une partie au moins de l'opération de refroidissement s'effectue par de l'air. On peut utiliser ainsi l'air seul ou un aérosol obtenu en pulvérisant un nuage aqueux dans le courant d'air. On peut en variante faire suivre le traitement à l'air d'un séjour dans un milieu aqueux par exemple dans des bacs-canaux.

Le blanchiment peut être effectué en chauffant directement par la vapeur ou par un mélange de vapeur et d'air chaud dans tout type de blancheur à la vapeur comportant des moyens pour recueillir le condensat, par exemple un blancheur à vis sans fin, à bande ou à lit fluidisé. Le produit peut se présenter en vrac ou sous forme d'une couche unitaire dans le cas du procédé appelé "blanchiment individuel rapide". La durée de l'opération de blanchiment est de 1 à 10 min. à une température de 75 à 120°C. On recueille de 0,11 à 0,50 kg de condensat/kg de produit traité selon l'efficacité du blancheur.

Le refroidissement a lieu par circulation d'air froid à travers un lit de produit de préférence suivie d'un séjour dans un milieu aqueux ou par fine pulvérisation d'un milieu aqueux dans un courant d'air froid. Un refroidissement rapide diminue les pertes par évaporation et améliore le rendement.

Selon un mode de réalisation, de l'air est soufflé à travers un lit vibré de particules d'aliment en une couche d'épaisseur uniforme, ce qui provoque le refroidissement par évaporation de l'eau provenant du produit chaud. De préférence, on prévoit une étape consécutive de refroidissement par séjour dans un milieu aqueux. En effet, on utilise généralement l'air du dehors avec lequel on ne peut en pratique refroidir les produits qu'à une température comprise entre 12 et 30°C selon son humidité relative et sa température. Or on désire les refroidir à une température plus basse sans mettre à contribution les congélateurs. Pour ce faire, on fait séjourner les légumes ou fruits par exemple dans un bac-canal rempli d'eau à 0-10°C, température à laquelle la diffusion des composés hydrosolubles dans l'eau est plutôt faible de même que la pollution de l'eau qui en résulte. Dans une

2

réalisation préférée, on refroidit indirectement l'eau utilisée dans un échangeur de chaleur avant de l'introduire à nouveau dans le baccanal de refroidissement. Dans une telle boucle de refroidissement, l'eau se sature rapidement en composés solubles et leur diffusion dans l'eau cesse, la charge polluante n'augmentant plus.

Selon un autre mode de réalisation, on refroidit les produits au moyen d'air pulsé associé à une pulvérisation d'un milieu aqueux froid. On peut pulvériser avantageusement une partie du condensat de blanchiment sur le produit afin de compenser les pertes par évaporation.

Le condensat quittant le blancheur contient de la matière solide (fines particules de légumes ou fruits, fragments de cellules végétales, sucres, vitamines, sels minéraux ou autres composés hydrosolubles)et doit être débarrassé des particules plus volumineuses qui obstrueraient les buses de pulvérisation lors de l'opération ultérieure de glaçage, par filtration, les pores du filtre ayant un diamètre inférieur à celui des ouvertures des buses ou par exemple par décantation dans une centrifugeuse.

On préfère concentrer le condensat de manière à disposer du volume approprié pour le glaçage par exemple par évaporation ou osmose inverse. La quantité nécessaire au glaçage, soit 1-7 % en poids du produit congelé est inférieure à la quantité de condensat provenant du blancheur, représentant 11-50 % en poids de la matière première mise en oeuvre. Une partie du condensat peut donc être pulvérisée sur le produit dans le refroidisseur à air et le reste concentré et utilisé pour le glaçage.

En variante, lorsque le refroidissement a lieu par l'air sans pulvérisation du condensat, ce dernier peut être concentré 2 à 10 fois, de manière à obtenir exactement le volume nécessaire au glaçage.

En utilisant les modes de réalisation préférés ci-dessus, on peut éliminer pratiquement totalement la pollution correspondant aux étapes de blanchiment et de refroidissement. De plus, ceux-ci favorisent la mise en oeuvre de blancheurs à faible demande énergétique, c'est-à-dire bien isolés thermiquement et comportant des sas à vapeur à l'entrée et à la sortie, puisque ces blancheurs produisent un faible volume de condensat devant être concentré et traité dans les étapes ultérieures.

On peut désirer ajuster la quantité de sel des légumes ou s'il s'agit des fruits leur teneur en sucre en faisant cheminer, par exemple les légumes, dans un baccanal d'eau salée. Après avoir récupéré les légumes sur une grille, on recycle avantageusement la saumure. Les légumes cheminent ensuite dans une auge où ils sont lavés de préférence à contre-courant de manière à les débarrasser de l'excès de sel tout en les refroidissant par exemple de la température ambiante jusqu'à une température proche de 0° C. Ce lavage s'effectue de préférence sous forme d'une boucle de refroidissement incluant un échangeur de chaleur.

Après salage et lavage, on congèle le produit dans tout équipement de congélation approprié par exemple tunnel de congélation à bandes, congélateur à lit fluidisé, système par immersion dans un ou pulvérisation d'un liquide cryogénique.

On peut effectuer le glaçage par pulvérisation du condensat sur le produit congelé ou par immersion du produit congelé dans le condensat, le condensat représentant 1 à 7 % en poids du produit fini, l'efficacité du glaçage étant d'autant meilleure que la température du produit est basse. Cette opération améliore la qualité du produit en formant une barrière contre la déshydratation pendant le stockage. Lorsque la solution de glaçage est constituée de condensat non concentré, il peut s'avérer nécessaire d'en diriger une partie vers la station d'épuration ou on peut avantageusement utiliser cette partie de solution rejetée pour compléter le liquide de couverture utilisé pour la mise en boîtes lorsque l'usine comporte également une ligne de fabrication de produits appertisés.

Dans certains cas, on traitera l'eau de refroidissement recyclée et le condensat de manière à en éliminer les substances amères, les colorants, les nitrates par exemple dans le cas des épinards, en faisant passer ces milieux aqueux à travers des colonnes garnies de résines échangeuses d'ions ou d'autres adsorbants sélectifs.

Les exemples suivants, dans lesquels les parties sont pondérales sauf indication contraire, illustrent l'invention.

**Exemple 1**

On blanchit des petits-pois ayant été préalablement lavés et triés (de 8,5 à 11 mm de diamètre) pendant 1 min. dans un blancheur à vapeur et à vis sans fin et on recueille 0,27 kg de condensat/kg de petits-pois. On refroidit immédiatement les petits-pois en lit fluidisé dans un courant d'air de 5000 kg/h, de température 17° C provenant de l'extérieur, depuis 90-100° C jusqu'à 20-22° C.

On fait passer le condensat contenant 3 % de matière sèche à travers un tamis dont les mailles ont 0,1 mm et on le concentre jusqu'à 18 % de matière sèche dans un évaporateur centrifuge.

Après refroidissement à l'air, on ajuste la quantité de sel des petits-pois en les faisant passer pendant 15 s dans un bac-canal dans lequel circule un courant de saumure (11 % de chlorure de sodium). Après séparation de la saumure, qui est recyclée, on refroidit les petits-pois jusqu'à une température voisine de 0° C dans une auge en ligne avec le bac-canal de saumurage et dans laquelle ils cheminent pendant 60 s au moyen d'une vis sans fin et l'eau de refroidissement circule à contre-courant, ce qui enlève en même temps l'excès de sel. A la sortie, l'eau est refroidie dans un échangeur de chaleur et recyclée à l'entrée.

On congèle ensuite les petits-pois à -15° C en lit fluidisé puis on glace leur surface en pulvérisant le condensat concentré ci-dessus par une buse d'orifice 0,9 mm située au centre d'un tambour rotatif horizontal portant le produit, qui est ainsi glacé uniformément avec 4-5 % de condensat par rapport au poids des petits-pois congelés.

**Exemple 2**

On blanchit des petits-pois lavés et triés (8,5 à 11 mm) dans un blancheur à vapeur à bande et on les refroidit à l'air en lit fluidisé avec pulvérisation d'un milieu aqueux. On recueille 0,21 kg de condensat/kg de petits-pois qu'on fait passer à travers un tamis vibrant dont les mailles ont 0,5 mm. On ajuste la teneur en sel comme dans l'exemple 1. On congèle les petits-pois puis on glace leur surface par pulvérisation du condensat dans un tambour rotatif horizontal à partir d'une buse d'orifice 0,7 mm située en son centre à raison de 0,05 kg de condensat/kg de petits-Pois. On utilise 0,10 kg du même condensat/kg de petits-pois dans l'étape de refroidissement à l'air ci-dessus de manière à remplacer l'eau qui s'est évaporée de la surface des petits-pois cependant que l'on élimine le reste du condensat en le dirigeant vers l'installation d'épuration.

**Exemple 3**

On peut illustrer l'avantage écologique du procédé selon l'invention par comparaison avec le blanchiment et le refroidissement conventionnels à l'eau en observant leur demande biochimique d'oxygène (DBO) respective.

Ce sont les matières organiques en solution ou en suspension très fine qui posent le plus de problèmes de pollution. La teneur en matières organiques d'une eau résiduaire en solution ou en suspension est évaluée en mesurant la consommation d'oxygène qu'entraîne leur dégradation oxydative par les microorganismes auxquels elle sert de substrat. Elle est exprimée en mg de DBO/litre. On détermine la $DBO_7$ en diluant, dans une proportion connue, l'eau résiduaire avec de l'eau exempte de matières organiques et saturée en oxygène, en plaçant celle-ci à l'incubation par sa propre charge microbienne à 20°C pendant 7 jours et en dosant l'oxygène résiduel pour connaître la quantité d'oxygène consommée. On effectue une série d'essais avec des dilutions différentes et on retient celui pour lequel l'oxygène consommé correspond à environ la moitié de l'oxygène disponible avant l'incubation, des essais avec uniquement l'eau de dilution servant de témoins. La teneur en oxygène dissous est déterminée par dosage volumétrique et la quantité en mg d'oxygène consommé rapportée au litre d'eau résiduaire est la $DBO_7$.

Comme référence, on a déterminé les valeurs du rendement et de la $DBO_7$ du procédé traditionnel comprenant les mêmes étapes de parage et lavage que les procédés des exemples 1 et 2, suivies d'un blanchiment à l'eau, d'un refroidissement par passage à travers un bac-canal d'eau, d'un saumurage et d'un ajustement de la teneur en sel par un second refroidissement par passage dans une auge d'eau, les petits-pois étant ensuite congelés sans glaçage.

On a obtenu les résultats suivants :

| | Procédé traditionnel | Procédé selon l'exemple 1 | Procédé selon l'exemple 2 |
|---|---|---|---|
| $DBO_7$ totale (comprenant lavage, blanchiment, refroidissement et ajustement de la teneur en sel) en mg/l | 27.000 | 17.000 | 18.800 |
| Rendement en % du poids de la matière première lavée et triée | 89,1 | 92,4 | 92,1 |

Le procédé selon l'invention produit une amélioration notable sur le plan nutritionnel, du rendement et de la pollution des eaux par rapport au procédé traditionnel.

**Revendications**

1. Procédé de préparation des légumes ou des fruits congelés produisant un volume réduit d'eaux résiduaires consistant à traiter les légumes ou les fruits de la manière habituelle jusqu'à l'étape de blanchiment, caractérisé par le fait qu'on les blanchit au moyen de vapeur d'eau ou d'un mélange de vapeur d'eau et d'air, qu'on récupère un condensat, qu'on refroidit les légumes ou les fruits au moins en partie au moyen d'air qu'on les congèle et qu'on procède au glaçage de leur surface avec au moins une partie du condensat produit lors du blanchiment.

2. Procédé selon la revendication 1, caractérisé par le fait qu'on élimine les particules grossières du condensat, qu'on concentre au moins une partie de celui-ci et qu'on utilise le concentrat obtenu comme solution de glaçage.

3. Procédé selon la revendication 2, caractérisé par le fait qu'on pulvérise une partie du condensat sur le produit durant l'étape de refroidissement.

4. Procédé selon la revendication 2, caractérisé par le fait qu'on concentre la totalité du condensat jusqu'à obtenir le volume exact nécessaire au glaçage.

5. Procédé selon la revendication 2, caractérisé par le fait qu'on traite le condensat débarrassé des particules grossières par des résines échangeuses d'ions de manière à en éliminer les substances solubles indésirables.

6. Procédé selon la revendication 1, caractérisé par le fait qu'on refroidit les légumes ou fruits en faisant circuler un courant d'air à travers un lit de produit et en les transférant dans un milieu aqueux qu'on recycle après l'avoir refroidi dans un échangeur de chaleur.

7. Procédé selon la revendication 1, caractérisé par le fait qu'on refroidit les légumes ou fruits en faisant circuler un courant d'air à travers un lit de produit et en pulvérisant sur celui-ci un milieu aqueux qu'on recycle après l'avoir refroidi dans un échangeur de chaleur.

8. Procédé selon l'une des revendications 1 à 7, dans lequel on traite des légumes, caractérisé par le fait qu'après leur refroidissement, on ajuste la teneur en sel des légumes en les faisant passer dans une saumure, en les séparant de celle-ci qu'on recycle avantageusement et en les lavant, de préférence à contre-courant, cependant qu'on recycle l'eau de lavage après l'avoir refroidie dans un échangeur de chaleur.

## Patentansprüche

1. Verfahren zur Zubereitung von gefrorenen Gemüsen oder Früchten mit verringerter Abwassermenge, bei dem die Gemüse oder Früchte bis zu dem Verfahrensschritt des Blanchierens in üblicher Weise behandelt werden,
dadurch gekennzeichnet,
daß man die Gemüse oder Früchte mit Wasserdampf oder einer Mischung aus Wasserdampf und Luft blanchiert, wobei ein Kondensat rückgewonnen wird,
daß man die Gemüse oder Früchte zumindest teilweise mit Luft abkühlt,
und daß man das Glasieren ihrer Oberfläche mit wenigstens einem Teil des bei ihrem Blanchieren erzeugten Kondensats durchführt.

2. Verfahren nach Anspruch 1, dadurch gekennzeichnet,
daß man die groben Partikel des Kondensats entfernt,
daß man zumindest einen Teil des Kondensats konzentriert,
und daß man das erhaltene Kondensat als Glasierlösung verwendet.

3. Verfahren nach Anspruch 2, dadurch gekennzeichnet, daß man einen Teil des Kondensats während des Abkühlens auf dem Produkt zerstäubt.

4. Verfahren nach Anspruch 2, dadurch gekennzeichnet, daß man das gesamte Kondensat konzentriert, bis man genau das für das Glasieren erforderlich Volumen erhält.

5. Verfahren nach Anspruch 2, dadurch gekennzeichnet, daß man das von den groben Partikeln befreite Kondensat zur Eliminierung unerwünschter löslicher Substanzen mit Ionenaustauscherharzen behandelt.

6. Verfahren nach Anspruch 1, dadurch gekennzeichnet, daß man die Gemüse oder Früchte abkühlt, indem man einen Luftstrom über einer Schicht des Produkts zirkulieren läßt und sie in ein wässriges Medium verbringt, das man nach Kühlung in einem Wärmetauscher rückführt

7. Verfahren nach Anspruch 1, dadurch gekennzeichnet, daß man die Gemüse oder Früchte abkühlt, indem man einen Luftstrom über einer Schicht des Produkts zirkulieren läßt und indem man auf diese ein wässriges Medium zerstäubt, das man nach Kühlung in einem Wärmetauscher rückführt

8. Verfahren nach einem der Ansprüche 1 bis 7 zur Behandlung von Gemüsen, dadurch gekennzeichnet, daß man nach dem Abkühlen den Salzgehalt einstellt, indem man
die Gemüse durch eine Salzlösung führt,
sie sodann von dieser trennt, wobei man die Salzlösung vorzugsweise zu Wiederverwendung rückführt,
und die Gemüse vorzugsweise im Gegenstrom wäscht, wobei man das Waschwasser nach Kühlung in einem Wärmetauscher zur Wiederverwendung rückführt.

## Claims

1. A process for the preparation of frozen fruit or vegetables, in which the volume of waste waters is reduced comprising treating the fruit or vegetables in the usual manner up to the blanching step, characterized by blanching them in steam or in a mixture of steam and air, recovering a condensate, cooling the vegetables or fruit at least partly with air, freezing the cooled fruit or vegetables and glazing the frozen fruit or vegetables by contacting the frozen fruit or vegetables with at least some of the condensate produced during blanching.

2. A process according to claim 1 wherein coarse particles are removed from the condensate, at least some of the condensate is concentrated and the concentrated condensate is used for glazing the frozen fruit or vegetables.

3. A process according to claim 2 wherein some of the condensate is sprayed over the product during the cooling stage.

4. A process according to claim 2 wherein all of the condensate is concentrated to the exact volume required for glazing.

5. A process according to claim 2 wherein the condensate which has been freed from coarse particles is treated with ion-exchange resin in order to remove undesirable soluble substances.

6. A process according to claim 1 further comprising transferring the cooled fruit or vegetables into an aqueous medium, further cooling the fruit or vegetables in the aqueous medium, and recycling the aqueous medium through a heatexchanger.

7. A process according to claim 1 further comprising spraying onto the fruits or vegetables during the cooling step an aqueous medium, and further recycling the aqueous medium through a heat-exchanger.

8. A process according to one of claims 1 to 7 for the treatment of vegetables wherein after the vegetables have been cooled, the salt content thereof is adjusted by passing the cooled vegetables into a brine, separating the cooled vegetables from the brine, recycling the brine, washing the vegetables and recycling the washing water through a heat-exchanger.